# EUROPEAN PATENT APPLICATION

(11) **EP 4 772 437 A1**
(43) Date of publication of application: **08.07.2026**
(21) Application number: 25227782.7
(22) Date of filing: 30.12.2025
(51) Int. Cl.: B64C 29/00, B64U 10/20, B64U 50/13

(54) **UNMANNED AERIAL VEHICLE**

(30) Priority: 02.01.2025 CN 202510012146
(71) Applicant: Autel Robotics Co., Ltd., Shenzhen, Guangdong 518055 (CN)
(72) Inventor: Yang, Guangzuo, Shenzhen, Guangdong, 518055 (CN)
(74) Representative: Gulde & Partner

(57) **Abstract**

Embodiments of the present disclosure relate to the technical field of unmanned aerial vehicles, and in particular, disclose an unmanned aerial vehicle, including an aerial vehicle body and a power mechanism. The power mechanism includes a first power assembly and a second power assembly, both arranged on the aerial vehicle body. The first power assembly is configured to enable vertical take-off and landing, hovering and flight direction adjustment of the unmanned aerial vehicle. The second power assembly is configured to provide horizontal power to the unmanned aerial vehicle. In the foregoing manner, in the embodiments of the present disclosure, the second power assembly is configured to provide horizontal power to the unmanned aerial vehicle, reducing workload of the first power assembly, improving flight efficiency and reducing energy consumption, thereby increasing endurance of the unmanned aerial vehicle.

## Description

### TECHNICAL FIELD

Embodiments of the present disclosure relate to the technical field of unmanned aerial vehicles, and in particular, to an unmanned aerial vehicle.

### BACKGROUND

Unmanned aerial vehicles generally adopt rotor power assemblies to implement vertical take-off and landing and flight. The unmanned aerial vehicles are widely used in fields such as aerial photography, positioning and mapping, agricultural plant protection and logistics transportation.

However, during implementation of embodiments of the present disclosure, the inventor discovers that currently, the unmanned aerial vehicles that adopt rotor power assemblies to implement vertical take-off and landing and flight have low flight efficiency, resulting in low endurance of the unmanned aerial vehicles.

### SUMMARY

A technical problem mainly resolved in the present disclosure is to provide an unmanned aerial vehicle, which can resolve a problem of low endurance of the unmanned aerial vehicle.

To resolve the foregoing technical problem, a technical solution adopted in the present disclosure is as follows: An unmanned aerial vehicle is provided, including an aerial vehicle body, a first power assembly and a second power assembly. The first power assembly is arranged on the aerial vehicle body and is configured to enable vertical take-off and landing, hovering and flight direction adjustment of the unmanned aerial vehicle. The second power assembly is arranged on the aerial vehicle body and is configured to provide horizontal power to the unmanned aerial vehicle.

Optionally, the second power assembly includes a ducted fan blade and a first power member, the ducted fan blade being connected to the first power member and the first power member being arranged on the aerial vehicle body and configured to drive the ducted fan blade to rotate.

Optionally, the second power assembly includes a ducted fan base, the ducted fan base being arranged on the aerial vehicle body and provided with a ducted fan groove, the ducted fan blade being rotatably accommodated in the ducted fan groove and the first power member being arranged on the ducted fan base.

Optionally, the second power assembly includes a first propeller blade and a second power member, the second power member being arranged on the aerial vehicle body, connected to the first propeller blade and configured to drive the first propeller blade to rotate.

Optionally, the aerial vehicle body is provided with an airflow channel, a first opening of the airflow channel being provided at a front end of the aerial vehicle body, a second opening of the airflow channel being provided at an end portion of a tail end of the aerial vehicle body and the second power assembly being arranged at the second opening.

Optionally, the first opening of the airflow channel is provided at a side portion of the front end of the aerial vehicle body.

Optionally, the aerial vehicle body includes a wing and the first power assembly includes a third power member and a propeller, the third power member being arranged at one end of the wing, the propeller being connected to the third power member and the third power member being configured to drive the propeller to rotate.

Optionally, one end of the third power member is arranged at a bottom portion of the end of the wing, the propeller is connected to the other end of the third power member, and the third power member is provided with a heat dissipation channel, a third opening of the heat dissipation channel being provided at one end of the third power member and a fourth opening of the heat dissipation channel being provided at the other end of the third power member.

Optionally, the wing is a flat-convex wing.

Optionally, the aerial vehicle body includes a fuselage, provided with the airflow channel and fixed to the other end of the wing.

In embodiments of the present disclosure, an unmanned aerial vehicle includes an aerial vehicle body, a first power assembly and a second power assembly. The first power assembly is arranged on the aerial vehicle body and is configured to enable vertical take-off and landing, hovering and flight direction adjustment of the unmanned aerial vehicle. The second power assembly is arranged on the aerial vehicle body and is configured to provide horizontal power to the unmanned aerial vehicle. The second power assembly is configured to provide horizontal power to the unmanned aerial vehicle, reducing workload of the first power assembly, improving flight efficiency and reducing energy consumption, thereby increasing endurance of the unmanned aerial vehicle.

### BRIEF DESCRIPTION OF THE DRAWINGS

To describe the technical solutions in the embodiments of the present disclosure more clearly, the following briefly describes accompanying drawings required for describing the embodiments of the present disclosure. Apparently, the accompanying drawings in the following descriptions show merely some embodiments of the present disclosure and a person of ordinary skill in the art may derive other drawings from the accompanying drawings without creative efforts.
FIG. 1 is a schematic structural diagram of an unmanned aerial vehicle according to an embodiment of the present disclosure;
FIG. 2 is a schematic structural diagram of an aerial vehicle body of an unmanned aerial vehicle according to an embodiment of the present disclosure;
FIG. 3 is another schematic structural diagram of an aerial vehicle body of an unmanned aerial vehicle according to an embodiment of the present disclosure;
FIG. 4 is a schematic structural diagram of a propeller of a first power assembly of an unmanned aerial vehicle according to an embodiment of the present disclosure;
FIG. 5 is a schematic structural exploded view of a shim assembly of a propeller of a first power assembly of an unmanned aerial vehicle according to an embodiment of the present disclosure;
FIG. 6 is a schematic structural cross-sectional view of a shim assembly of a propeller of a first power assembly of an unmanned aerial vehicle according to an embodiment of the present disclosure;
FIG. 7 is a schematic structural diagram of a second power assembly of an unmanned aerial vehicle according to an embodiment of the present disclosure;
FIG. 8 is another schematic structural diagram of a second power assembly of an unmanned aerial vehicle according to an embodiment of the present disclosure;
FIG. 9 is a schematic structural diagram of another unmanned aerial vehicle according to an embodiment of the present disclosure; and
FIG. 10 is a schematic structural diagram of another second power assembly of another unmanned aerial vehicle according to an embodiment of the present disclosure.

### List of Reference Numerals:

100: unmanned aerial vehicle;
1: aerial vehicle body; 11: fuselage; 111: airflow channel; 1111: first opening; 1112: second opening; 112: fin; 12: wing;
2: first power assembly; 21: third power member; 211: heat dissipation channel; 2111: third opening; 2112: fourth opening; 22: propeller; 221: propeller base; 2211: first through hole; 222: propeller clamp; 2221: second through hole; 223: second propeller blade; 224: connecting member; 225: shim assembly; 2251: retainer; 2252: second shim; 2253: third shim; 2254: first rotation groove; 2255: second rotation groove; 2256: rolling member; 2257: rolling groove;
3: second power assembly; 31: ducted fan base; 311: ducted fan groove; 312: fifth opening; 32: ducted fan blade; 33: first power member; 34: mounting base; 35: first propeller blade; and 36: second power member.

### DETAILED DESCRIPTION

For ease of understanding of the present disclosure, the present disclosure is described in further detail below with reference to the accompanying drawings and specific embodiments. It is to be noted that, when a component is expressed as "being fixed to" another component, the component may be directly on the another component, or one or more intermediate components may exist between the component and the another component. When one component is expressed as "being connected to" another component, the component may be directly connected to the another component, or one or more intermediate components may exist between the component and the another component. The terms "vertical", "horizontal", "left", "right" and similar expressions used in the specification are merely used for an illustrative purpose.

Unless otherwise defined, meanings of all technical and scientific terms used in the specification are the same as those usually understood by a person skilled in the art to which the present disclosure belongs. Terms used in the specification of the present disclosure are merely intended to describe objectives of the specific embodiments and are not intended to limit the present disclosure. A term "and/or" used in the specification includes any or all combinations of one or more related listed items.

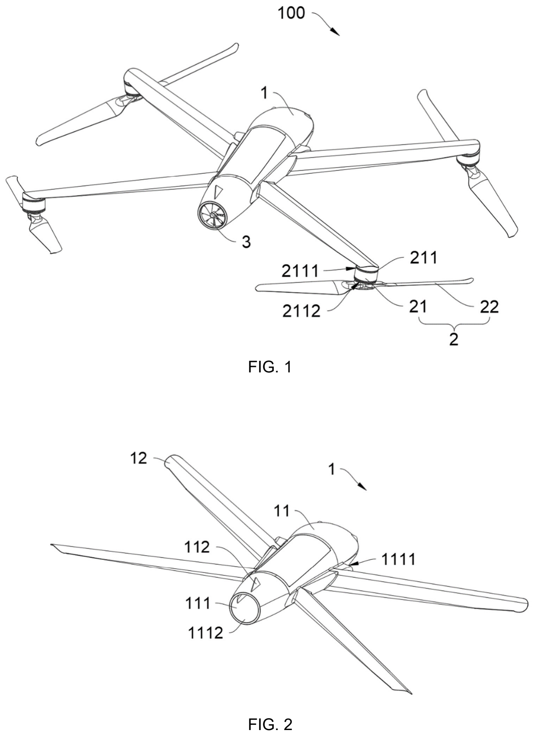

Refer to FIG. 1. The present disclosure provides an unmanned aerial vehicle 100. The unmanned aerial vehicle 100 includes an aerial vehicle body 1, a first power assembly 2 and a second power assembly 3. The first power assembly 2 is arranged on the aerial vehicle body 1 and is configured to enable vertical take-off and landing, hovering and flight direction adjustment of the unmanned aerial vehicle 100. The second power assembly 3 is arranged on the aerial vehicle body 1 and is configured to provide horizontal power to the unmanned aerial vehicle 100.

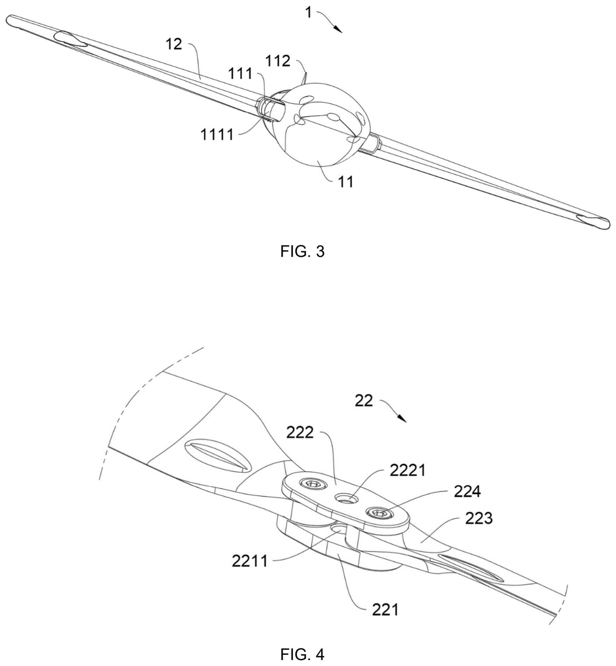

For the foregoing aerial vehicle body 1, refer to FIG. 2 and FIG. 3. The aerial vehicle body 1 includes a fuselage 11 and wings 12. The fuselage 11 is provided with an airflow channel 111 and a fin 112. A first opening 1111 of the airflow channel 111 is provided at a front end of the fuselage 11. A second opening 1112 of the airflow channel 111 is provided at an end portion of a tail end of the fuselage 11. In this way, an airflow of the airflow channel 111 flows along the front end of the fuselage 11 to the tail end of the fuselage 11, to cool the aerial vehicle body 1 when the airflow flows along the airflow channel 111. The fin 112 is arranged at a top portion of the tail end of the fuselage 11. The fin 112 is in a triangle shape. The fin 112 is configured to enhance directional stability and an anti-skid capability of the unmanned aerial vehicle 100 during flight. The fin 112 is further configured to reduce aerodynamic interference and a tail vortex during high-speed flight of the unmanned aerial vehicle 100, improving flight efficiency and energy utilization, thereby increasing endurance. One end of the wing 12 is provided for arrangement of a part of power mechanisms. The other end of the wing 12 is fixed to the fuselage 11.

In some embodiments, the first opening 1111 of the airflow channel 111 is provided at a side portion of the front end of the fuselage 11. A quantity of first openings 1111 of the airflow channel 111 is two. One first opening 1111 of the airflow channel 111 is provided at one side portion of the front end of the fuselage 11. The other first opening 1111 of the airflow channel 111 is provided at another side portion of the front end of the fuselage 11. Moreover, in some embodiments, the airflow channel 111 is provided at a top portion or a bottom portion of the front end of the fuselage 11.

In some embodiments, the second opening 1112 of the airflow channel 111 is not limited to being arranged at the end portion of the tail end of the fuselage 11 and may be alternatively arranged at a top portion or a bottom portion of the tail end of the fuselage 11.

In some embodiments, the wing 12 is a flat-convex wing 12. However, the wing 12 is not limited to the flat-convex wing 12 and may alternatively be another structure. For example, the wing 12 is a biplane wing 12, a swept wing 12, or the like.

In some embodiments, the aerial vehicle body 1 further includes a power supply. The power supply is arranged on the fuselage 11. The power supply is separately electrically connected to the first power assembly 2 and the second power assembly 3. The power supply is configured to provide electric energy to the first power assembly 2 and the second power assembly 3. The power supply is a rechargeable battery or a disposable battery.

For the foregoing first power assembly 2, refer to FIG. 1 and FIG. 4. The first power assembly 2 includes a third power member 21 and a propeller 22. One end of the third power member 21 is arranged at a bottom portion of an end of the wing 12. The third power member 21 is electrically connected to the power supply. The propeller 22 is connected to the other end of the third power member 21, so that the propeller 22 is located below the third power member 21, to reduce aerodynamic interference between the rotating propeller 22 and the aerial vehicle body 1, thereby reducing aerodynamic drag to reduce a power loss, and to reduce turbulence of the airflow around the aerial vehicle body 1 to improve propulsive efficiency, thereby reducing the power loss.

The third power member 21 is provided with a heat dissipation channel 211, so that the heat dissipation channel 211 is located above the propeller 22. A third opening 2111 of the heat dissipation channel 211 is provided at one end of the third power member 21. A fourth opening 2112 of the heat dissipation channel 211 is provided at the other end of the third power member 21. In this way, the airflow enters the heat dissipation channel 211 from the outside through the third opening 2111 and then exits through the fourth opening 2112. In this way, a flowing direction of the airflow in the heat dissipation channel 211 is consistent with an axial direction of an output shaft of the third power member 21, helping reduce temperature rise of the third power member 21.

It may be understood that, in some embodiments, the third power member 21 is not limited to the foregoing arrangement manner and may be alternatively arranged in another manner. For example, the third power member 21 is arranged at a top portion of an end of the wing 12. Moreover, in some embodiments, an end of the third power member 21 is obliquely arranged at the other end of the wing 12, so that the first power assembly 2 is arranged at an angle relative to a flight direction of the unmanned aerial vehicle 100.

In some embodiments, the third power member 21 is a motor.

The propeller 22 includes a propeller base 221, a propeller clamp 222, a second propeller blade 223 and a connecting member 224. The propeller base 221 is connected to the other end of the third power member 21. The propeller base 221 is provided with a first through hole 2211. The first through hole 2211 is provided for the output shaft of the third power member 21 to be inserted. The propeller clamp 222 is opposite to the propeller base 221. The propeller clamp 222 is provided with a second through hole 2221. The second through hole 2221 is provided for the output shaft of the third power member 21 to be inserted. The second propeller blade 223 is clamped between the propeller base 221 and the propeller clamp 222. The second propeller blade 223 can rotate relative to the propeller clamp 222 and the propeller base 221, so that the second propeller blade 223 is folded or unfolded. The connecting member 224 passes through the propeller clamp 222 and the second propeller blade 223 and is then connected to the propeller base 221. The connecting member 224 abuts against the propeller clamp 222, so that the second propeller blade 223 can rotate around the connecting member 224 relative to the propeller clamp 222.

In some embodiments, a quantity of second propeller blades 223 is two. However, the quantity of second propeller blades 223 is not limited thereto and may alternatively be three, four, five, or the like.

In some embodiments, to reduce wear on the second propeller blade 223, the propeller 22 further includes a first shim. The first shim is sleeved on the connecting member 224. The first shim is placed between the second propeller blade 223 and the propeller clamp 222 and abuts against the second propeller blade 223 and the propeller clamp 222. Alternatively, the first shim is placed between the second propeller blade 223 and the propeller base 221 and abuts against the second propeller blade 223 and the propeller base 221. Moreover, in some embodiments, to further reduce the wear on the second propeller blade 223, a quantity of first shims is two. One first shim is placed between one side of the second propeller blade 223 and the propeller base 221 and abuts against the side of the second propeller blade 223 and the propeller base 221. The other first shim is placed between the other side of the second propeller blade 223 and the propeller clamp 222 and abuts against the other side of the second propeller blade 223 and the propeller clamp 222.

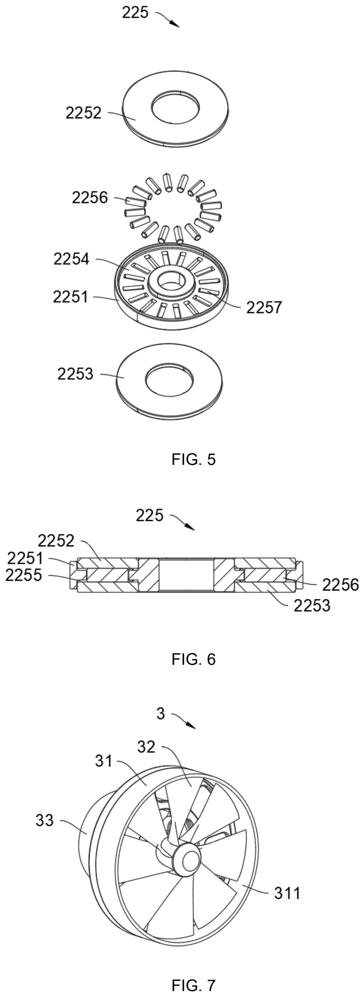

It may be understood that, in some embodiments, the propeller 22 is not limited to the foregoing structure and may alternatively be another structure. For example, refer to FIG. 5 and FIG. 6. The propeller 22 does not include a shim and alternatively includes a shim assembly 225. The shim assembly 225 is sleeved on the connecting member 224. The shim assembly 225 is placed between the second propeller blade 223 and the propeller clamp 222 and abuts against the second propeller blade 223 and the propeller clamp 222. Alternatively, the shim assembly 225 is placed between the second propeller blade 223 and the propeller base 221 and abuts against the second propeller blade 223 and the propeller base 221. In this way, the wear on the second propeller blade 223 is reduced.

The shim assembly 225 includes a retainer 2251, a second shim 2252 and a third shim 2253. The retainer 2251, the second shim 2252 and the third shim 2253 are all sleeved on the connecting member 224. The second shim 2252 is rotatably arranged on one side of the retainer. The third shim 2253 is rotatably arranged on the other side of the retainer 2251. The second shim 2252 abuts against the propeller clamp 222 or the propeller base 221. The third shim 2253 abuts against the second propeller blade 223. The second shim 2252 and the third shim 2253 are both rotatably arranged on the retainer 2251, so that rotational frictional resistance of the second propeller blade 223 is reduced.

In some embodiments, to reduce space occupied by the shim assembly 225, the retainer 2251 is provided with a first rotation groove 2254 and a second rotation groove 2255. The first rotation groove 2254 is provided on one side of the retainer. The second rotation groove 2255 is provided on the other side of the retainer. The second shim 2252 is rotatably arranged on the first rotation groove 2254 and protrudes from the first rotation groove 2254. The third shim 2253 is rotatably arranged on the second rotation groove 2255 and protrudes from the second rotation groove 2255.

In some embodiments, the shim assembly 225 further includes rolling members 2256. The retainer 2251 is provided with rolling grooves 2257. The rolling groove 2257 is in communication with the first rotation groove 2254 and the second rotation groove 2255. The rolling member 2256 is rollingly arranged in the rolling groove 2257. One side of the rolling member 2256 extends into the first rotation groove 2254. One side of the rolling member 2256 abuts against the second shim 2252. Another side of the rolling member 2256 extends into the second rotation groove 2255. Another side of the rolling member 2256 abuts against the third shim 2253.

In some embodiments, the rolling member 2256 is any of a roll pin, a roll ball or a roller.

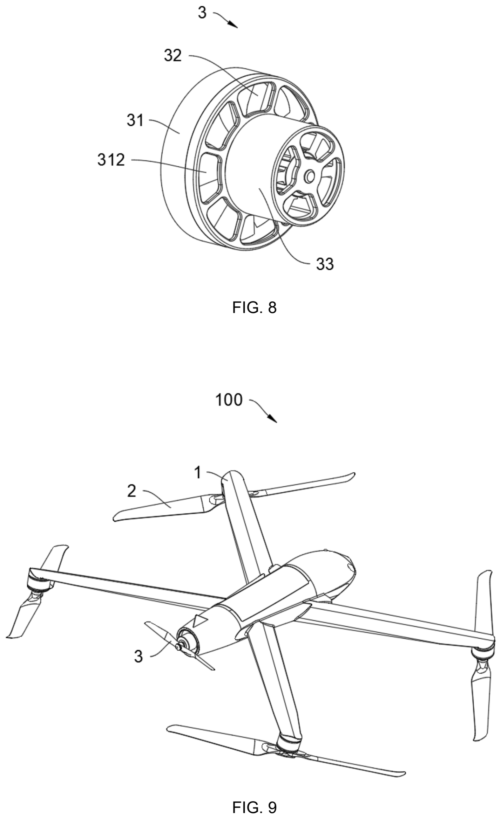

For the foregoing second power assembly 3, refer to FIG. 7 and FIG. 8. The second power assembly 3 is arranged at the second opening 1112 of the airflow channel 111 located at the end portion of the tail end of the fuselage 11. The second power assembly 3 includes a ducted fan base 31, ducted fan blades 32 and a first power member 33. The ducted fan base 31 is arranged to be located at the second opening 1112. The ducted fan blades 32 are connected to the first power member 33. The first power member 33 is arranged on the ducted fan base 31, is electrically connected to the power supply and is configured to drive the ducted fan blades 32 to rotate, to provide horizontal flight power.

In some embodiments, the first power member 33 is a motor.

The ducted fan base 31 is provided with a ducted fan groove 311 and fifth openings 312. The ducted fan groove 311 is in communication with the fifth openings 312. The ducted fan blades 32 are accommodated in the ducted fan groove 311. The fifth openings 312 are in communication with the airflow channel 111, to enable the airflow flowing through the airflow channel 111 to flow out through the fifth openings 312, so that an airflow direction of the horizontal power is consistent with a cooling airflow direction of the aerial vehicle body 1, improving cooling efficiency of the aerial vehicle body 1. It is to be noted that, the airflow flowing through the airflow channel 111 further performs heat dissipation on the first power member 33.

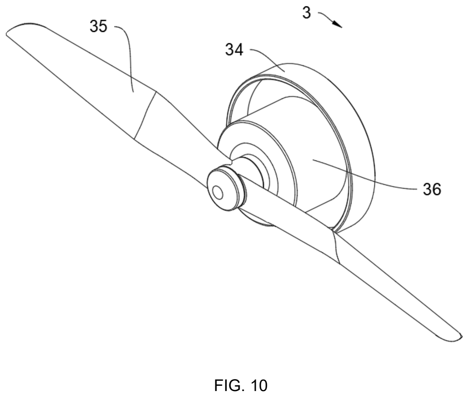

It may be understood that, in some embodiments, the second power assembly 3 is not limited to the foregoing structure. The second power assembly 3 may alternatively be another structure. For example, refer to FIG. 9 and FIG. 10. The second power assembly 3 includes a mounting base 34, a first propeller blade 35 and a second power member 36. The mounting base 34 is arranged at the second opening 1112. The first propeller blade 35 is connected to the second power member 36. The second power member 36 is arranged at the mounting base 34, is electrically connected to the power supply and is configured to drive the first propeller blade 35 to rotate, to provide horizontal flight power.

In some embodiments, the second power member 36 is a motor.

The mounting base 34 is provided with a sixth opening. The sixth opening is in communication with the airflow channel 111, to enable the airflow flowing through the airflow channel 111 to flow out through the sixth opening, so that an airflow direction of the horizontal power is consistent with a cooling airflow direction of the aerial vehicle body 1, improving cooling efficiency of the aerial vehicle body 1. It is to be noted that, the airflow flowing through the airflow channel 111 further performs heat dissipation on the second power member 36.

It may be understood that, in some embodiments, the second power assembly 3 is not limited to being arranged at the second opening 1112 of the airflow channel 111 located at the end portion of the tail end of the fuselage 11 and may be alternatively arranged at a top portion of the fuselage 11, a side portion of the fuselage 11, the top portion of the wing 12, or the bottom portion of the wing 12.

It may be understood that, in some embodiments, the fuselage 11 and/or the wing 12 is provided with an accommodation cavity for loading chemical energy. The first power member 33, the second power member 36 and the third power member 21 are all engines. The accommodation cavity is in communication with the first power member 33, the second power member 36 and the third power member 21 separately.

In the embodiments of the present disclosure, an unmanned aerial vehicle 100 includes an aerial vehicle body 1, a first power assembly 2 and a second power assembly 3. The first power assembly 2 is arranged on the aerial vehicle body 1 and is configured to enable vertical take-off and landing, hovering and flight direction adjustment of the unmanned aerial vehicle 100. The second power assembly 3 is arranged on the aerial vehicle body 1 and is configured to provide horizontal power to the unmanned aerial vehicle 100. The second power assembly 3 is configured to provide horizontal power to the unmanned aerial vehicle 100, reducing workload of the first power assembly 2, improving flight efficiency and reducing energy consumption, thereby increasing endurance of the unmanned aerial vehicle 100.

It is to be noted that, the specification of the present disclosure and the accompanying drawings thereof illustrate preferred embodiments of the present disclosure. However, the present disclosure can be implemented in various different forms and is not limited to the embodiments described in this specification. These embodiments are not intended to be an additional limitation on the content of the present disclosure and are described for the purpose of providing a more thorough and comprehensive understanding of the content disclosed in the present disclosure. Moreover, the above technical features can further be combined to form various embodiments not listed above. All such embodiments shall be construed as falling within the scope of the present disclosure. Further, persons of ordinary skill in the art may make improvements and variations according to the above descriptions. Such improvements and variations shall all fall within the protection scope of the appended claims of the present disclosure.

## Claims

1. An unmanned aerial vehicle, **characterized by** comprising:
an aerial vehicle body;
a first power assembly, arranged on the aerial vehicle body and configured to enable vertical take-off and landing, hovering and flight direction adjustment of the unmanned aerial vehicle; and
a second power assembly, arranged on the aerial vehicle body and configured to provide horizontal power to the unmanned aerial vehicle.

2. The unmanned aerial vehicle according to claim 1, **characterized in that**
the second power assembly comprises a ducted fan blade and a first power member, the ducted fan blade being connected to the first power member and the first power member being arranged on the aerial vehicle body and configured to drive the ducted fan blade to rotate.

3. The unmanned aerial vehicle according to claim 2, **characterized in that**
the second power assembly comprises a ducted fan base, the ducted fan base being arranged on the aerial vehicle body and provided with a ducted fan groove, the ducted fan blade being rotatably accommodated in the ducted fan groove and the first power member being arranged on the ducted fan base.

4. The unmanned aerial vehicle according to claim 1, **characterized in that**
the second power assembly comprises a first propeller blade and a second power member, the second power member being arranged on the aerial vehicle body, connected to the first propeller blade and configured to drive the first propeller blade to rotate.

5. The unmanned aerial vehicle according to any of claims 2 to 4, **characterized in that**
the aerial vehicle body is provided with an airflow channel, a first opening of the airflow channel being provided at a front end of the aerial vehicle body, a second opening of the airflow channel being provided at an end portion of a tail end of the aerial vehicle body and the second power assembly being arranged at the second opening.

6. The unmanned aerial vehicle according to claim 5, **characterized in that**
the first opening of the airflow channel is provided at a side portion of the front end of the aerial vehicle body.

7. The unmanned aerial vehicle according to claim 5, **characterized in that**
the aerial vehicle body comprises a wing and the first power assembly comprises a third power member and a propeller, the third power member being arranged at one end of the wing, the propeller being connected to the third power member and the third power member being configured to drive the propeller to rotate.

8. The unmanned aerial vehicle according to claim 7, **characterized in that**
one end of the third power member is arranged at a bottom portion of the end of the wing, the propeller is connected to the other end of the third power member, and the third power member is provided with a heat dissipation channel, a third opening of the heat dissipation channel being provided at one end of the third power member and a fourth opening of the heat dissipation channel being provided at the other end of the third power member.

9. The unmanned aerial vehicle according to claim 7, **characterized in that**
the wing is a flat-convex wing.

10. The unmanned aerial vehicle according to claim 7, **characterized in that**
the aerial vehicle body comprises a fuselage, provided with the airflow channel and fixed to the other end of the wing.
